# EUROPÄISCHE PATENTANMELDUNG

(11) **EP 2 878 499 A2**
(43) Veröffentlichungstag der Anmeldung: **03.06.2015**
(21) Anmeldenummer: 14193017.2
(22) Anmeldetag: 13.11.2014
(51) Int. Cl.: B60S 3/04, B60S 3/00

(54) **Verfahren und Vorrichtung zur Reinigung von Fahrzeugen**

(30) Priorität: 02.12.2013 DE 102013113327
(71) Anmelder: Reitz Holding GmbH & Co. KG, 37671 Höxter-Albaxen (DE)
(72) Erfinder: Rohdich, Christian, 37170 Uslar (DE); Dolereit, Dennis, 3628 Uttigen (CH)
(74) Vertreter: Dantz, Jan Henning

(57) **Zusammenfassung**

Es wird ein Verfahren zur Reinigung einer Oberseite eines Fahrzeuges (12) beschrieben. Eine Vorrichtung zur Reinigung von Fahrzeugen (12), insbesondere von Lastkraftwagen, Anhängern oder Schienenfahrzeugen, umfasst ein Gestell (11), an dem ein an der Oberseite (13) des Fahrzeuges (12) positionierbarer Halter (10) vorgesehen ist, wobei an dem Halter (10) eine Düse (9) zum Ausblasen von Luft zum Entfernen von Ablagerungen an einer Oberseite (13) eines Fahrzeuges (12) vorgesehen ist..

## Beschreibung

Die vorliegende Erfindung betrifft ein Verfahren zur Reinigung einer Oberseite eines Fahrzeuges und eine Vorrichtung zur Reinigung von Fahrzeugen, insbesondere von Lastkraftwagen, Anhängern oder Schienenfahrzeugen, mit einem Gestell, an dem ein an der Oberseite des Fahrzeuges positionierbarer Halter vorgesehen ist.

Es ist bekannt, dass sich an der Oberseite eines Fahrzeuges, insbesondere einer Dachfläche, Ablagerungen in Form von Schnee, Eis, anderen Festkörpern oder Wasser ansammeln können. Diese Ablagerungen stellen bei einer Fahrt für den nachfolgenden Straßenverkehr ein Risiko dar, wenn sie nicht vor Fahrtantritt entfernt werden. Gemäß geltenden Vorschriften besteht eine Pflicht zur Reinigung der Oberseite des Fahrzeuges von solchen Ablagerungen, damit diese nicht durch den Fahrtwind nach hinten weggeweht werden und nachfolgende Fahrzeuge gefährden. Gerade im Winter stellt dies ein Problem dar, wenn Schnee und Eis an der Oberseite des Fahrzeuges angelagert sind, die nachfolgende Fahrzeuge, aber auch Passanten, gefährden können. Ein Entfernen von solchen Ablagerungen ist daher notwendig, wobei gerade bei LKWs oder Anhängern die Dachfläche schlecht erreichbar ist. Ein manuelles Reinigen der Oberseite des Fahrzeuges ist auch aufgrund der Größe der Flächen aufwändig.

Es ist daher Aufgabe der vorliegenden Erfindung, eine Vorrichtung und ein Verfahren zur Reinigung einer Oberseite eines Fahrzeuges zu schaffen, die auf einfache Weise die Ablagerungen an der Oberseite eines Fahrzeuges entfernen können.

Diese Aufgabe wird mit einem Verfahren mit den Merkmalen des Anspruches 1 und einer Vorrichtung mit den Merkmalen des Anspruches 4 gelöst.

Bei dem erfindungsgemäßen Verfahren zur Reinigung einer Oberseite eines Fahrzeuges wird zunächst ein Gestell angefahren, an dem ein an der Oberseite des Fahrzeuges positionierbarer Halter mit einer Düse zum Ausblasen von Luft vorgesehen ist. Dann wird die Düse an dem Halter derart passiert, dass die Ablagerungen an der Oberseite des Fahrzeuges über den Luftstrom entfernt werden. Bei dem Verfahren können in kurzer Zeit mehrere Fahrzeuge hintereinander von Ablagerungen, wie Schnee oder Eis, befreit werden, ohne dass der Fahrer manuell bei der Reinigung eingreifen muss.

Vorzugsweise wird der Abstand der Düse zur Oberseite des Fahrzeuges automatisch gesteuert. Hierfür können entsprechende Sensoren, benachbart zu der Düse oder bereits in der Düse integriert, eingesetzt werden, um den Abstand zwischen der Oberseite des Fahrzeuges und der Düse im Wesentlichen konstant zu halten.

Bei der erfindungsgemäßen Vorrichtung ist ein an der Oberseite des Fahrzeuges positionierbarer Halter vorgesehen, wobei an dem Halter eine Düse zum Ausblasen von Luft zum Entfernen von Ablagerungen an einer Oberseite des Fahrzeuges vorgesehen ist. Über die Düse werden Ablagerungen in Form von Festkörpern, wie Schnee oder Eis, weggeblasen, so dass diese nach Fahrtantritt keine Gefährdung mehr für den nachfolgenden Verkehr darstellen können. Über die Düse können dabei auch große Dachflächen gereinigt werden, insbesondere bei LKWs, Anhängern oder Schienenfahrzeugen.

In einer bevorzugten Ausgestaltung ist die Düse über einen flexiblen Schlauch oder bewegliche Rohrelemente an ein Gebläse angeschlossen. Dadurch ist es möglich, das Gebläse feststehend und die Düse beweglich anzuordnen. Das Gebläse kann dabei sowohl an der Oberseite eines Portals angeordnet sein, das benachbart zu dem Gestell mit der Düse angeordnet ist oder das Gestell bildet, als auch bodennah auf einem ebenen festen Untergrund neben dem Führungsgestell der Düse stehen.

Vorzugsweise ist die Düse relativ zu dem Fahrzeug höhenverstellbar angeordnet, so dass unterschiedliche Fahrzeuge mit der Vorrichtung gereinigt werden können. Dabei kann ein Antrieb vorgesehen sein, mittels dem die Düse automatisch in der Höhe verstellbar ist. Vorzugsweise umfasst die Vorrichtung hierfür einen Sensor zur Erfassung der Höhe der Oberseite des Fahrzeuges, so dass die Düse in die Höhe bewegt werden kann, während das Fahrzeug unterhalb der Düse entlang gefahren wird.

Für eine effektive Reinigung der Oberseite eines Fahrzeuges kann die Düse den Luftstrom in einem Winkel auf die Oberseite des Fahrzeuges aufblasen, der in einem Bereich zwischen 5° und 45°, insbesondere 10° bis 30°, zur Horizontalen ausgerichtet ist. Die Düse kann dabei einen Schlitz aufweisen, der sich im Wesentlichen über mehr als 60 % der Breite eines Fahrzeuges erstreckt, insbesondere über mehr als 80 %. Diese Düse kann sich auch über die gesamte Breite der Oberseite des Fahrzeuges erstrecken, so dass auf effektive Weise auch große Dachflächen gereinigt werden können. Der mit der Düse ausblasbare Volumenstrom kann hierfür in einem Bereich zwischen 0,5 bis 10 m³/s, insbesondere 1 bis 5 m³/s liegen, je nach Größe der Düsenöffnung und des Gebläses.

Das Gestell für den Halter mit der Düse kann als Portal ausgebildet sein, wobei an dem Verbindungselement zwischen zwei Pfosten des Portals der Halter mit der Düse angeordnet ist.

Gemäß einer weiteren Ausgestaltung der Erfindung weist die Düse zwei im Wesentlichen V-förmig angeordnete Auslassschlitze auf. Dadurch können Ablagerungen von der Oberseite des Fahrzeuges zur Seite weggeblasen werden. Die Düse kann dabei in Draufsicht im Wesentlichen dreieckförmig ausgebildet sein, wobei zusätzlich zu den V-förmig angeordneten Auslassschlitzen weitere Düsenöffnungen vorgesehen sein können. Zudem ist es möglich, statt der Auslassschlitze auch die Düse so dicht über der Oberseite des Fahrzeuges zu positionieren, dass Luft in dem Schlitz zwischen der Unterseite der Düse und der Oberseite des Fahrzeuges ausgeblasen wird und dadurch eine Reinigung von Ablagerungen erfolgt.

Die Erfindung wird nachfolgend anhand eines Ausführungsbeispiels mit Bezug auf die beigefügten Zeichnungen näher erläutert. Es zeigen:
- Figur 1: eine perspektivische Ansicht einer erfindungsgemäßen Vorrichtung zur Reinigung einer Oberseite eines Fahrzeuges;

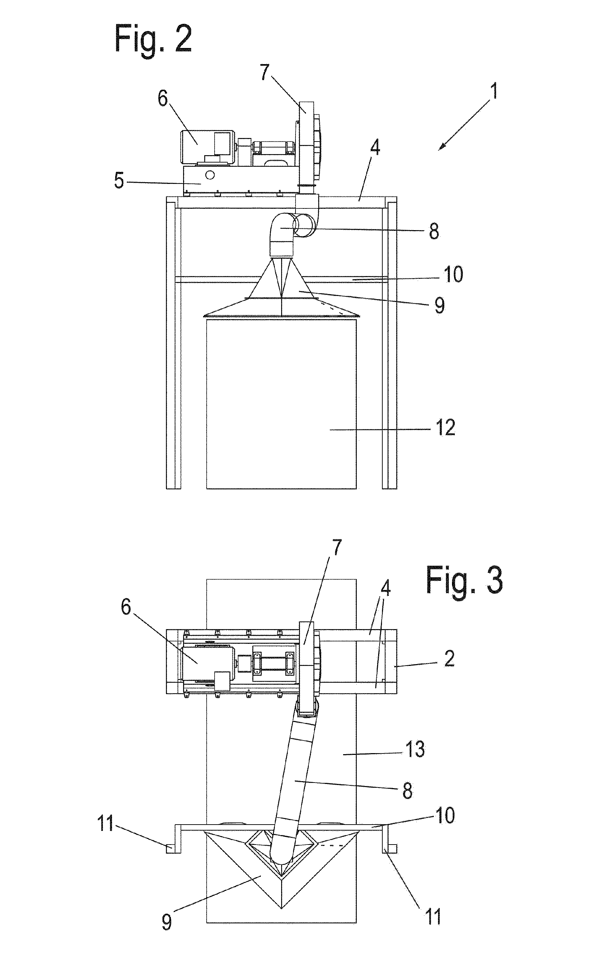

- Figur 2: eine Vorderansicht auf die Vorrichtung der Figur 1;
- Figur 3: eine Draufsicht auf die Vorrichtung der Figur 1;
- Figur 4: eine Seitenansicht auf die Vorrichtung der Figur 1, und
- Figur 5: eine perspektivische Ansicht auf die Vorrichtung der Figur 1 mit einem höheren Fahrzeug.

Eine Vorrichtung 1 zur Reinigung eines schematisch dargestellten Fahrzeuges 12 umfasst ein Trägersystem 2 mit einem Portal, das Pfosten 3 aufweist, die an der Oberseite über Querstreben 4 miteinander verbunden sind. Auf den Querstreben ist ein Gestell 5 für einen Motor 6 vorgesehen, der ein Gebläse 7 antreibt. Das Gebläse 7 saugt Umgebungsluft an und leitet diese über einen Schlauch 8 zu einer Düse 9.

Die Düse 9 ist an der Oberseite des schematisch dargestellten Fahrzeuges 12 angeordnet und bläst Luft mit hoher Geschwindigkeit aus, um Ablagerungen an einer Oberseite 13 des Fahrzeuges 12 wegzublasen. Die Düse 9 wird dabei in einem vorbestimmten Abstand zu der Oberseite 13 des Fahrzeuges 12 positioniert, wobei die Düse 9 an einem Halter 10 fixiert ist, der höhenbeweglich zwischen zwei Pfosten 11 eines Gestells gehalten ist. Der Halter 10 kann über einen nicht dargestellten Antrieb in der Höhe entlang der Pfosten 11 verfahren werden. Für eine automatische Höhenverstellung kann zudem ein Sensor vorgesehen sein, der die Höhe der Oberseite 13 des Fahrzeuges 12 oder der Oberseite der Ablagerungen auf dem Fahrzeug 12 misst.

Die Düse 9 kann an ihrer Unterseite ein oder mehrere Auslassschlitze aufweisen, die sich im Wesentlichen über die gesamte Breite des Fahrzeuges 12 erstrecken. An den Auslassschlitzen kann die Luft vom Gebläse 7 in einem Winkel zur Horizontalen ausgeblasen werden, beispielsweise in einem Winkel zwischen 10° und 30°, um Ablagerungen an der Oberseite 13 des Fahrzeuges 12 besser entfernen zu können. Zudem können die Auslassschlitze im Wesentlichen V-förmig in einer Draufsicht angeordnet sein, um Ablagerungen zur Seite des Fahrzeuges 12 wegzublasen. Statt der Vorsehung von Auslassschlitzen kann auch die Unterseite der Düse 9 vollständig offen ausgebildet sein, wobei dann die Schlitze zwischen der Unterseite der Düse 9 und der Oberseite 13 des Fahrzeuges 12 gebildet werden. Die Düse 9 kann hierfür in Draufsicht im Wesentlichen dreieckförmig ausgebildet sein, wobei eine Spitze der Düse mittig angeordnet ist, die dann an der Oberseite 13 des Fahrzeuges 12 angeordnet wird.

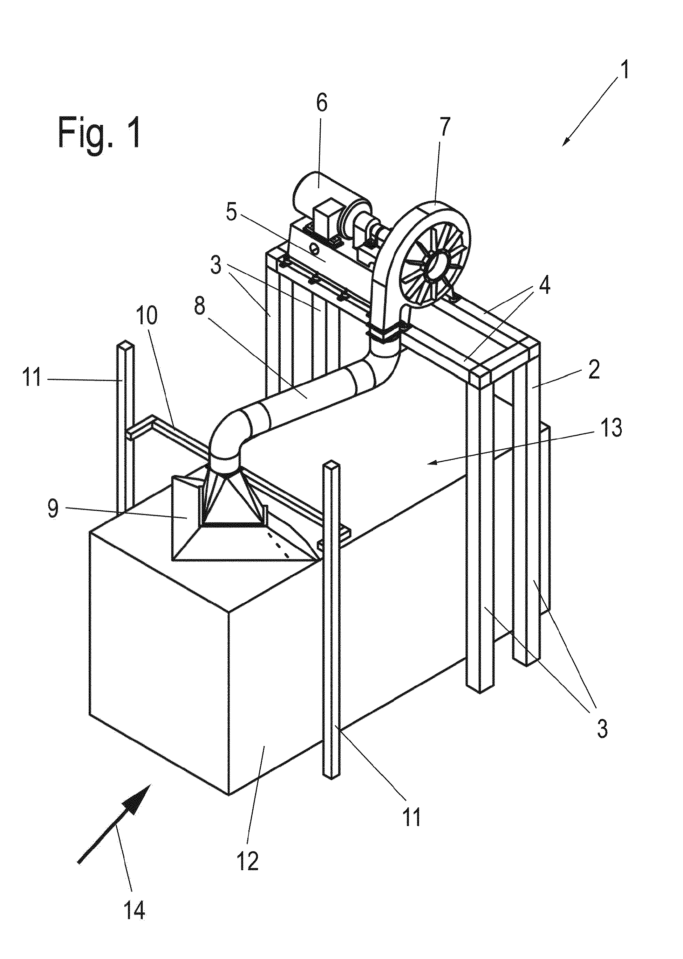

In Figur 1 ist die Fahrtrichtung des Fahrzeuges 12 mit dem Pfeil 14 dargestellt, wobei das Fahrzeug 12 unterhalb der Düse 9 entlang gefahren wird.

Das Fahrzeug kann als LKW, als Anhänger eines LKWs, als Schienenfahrzeug, als Fahrzeug mit einem Container oder als anderes Fahrzeug ausgebildet sein, bei dem an der Oberseite 13, insbesondere der Dachfläche, Ablagerungen in Form von Festkörpern entfernt werden sollen.

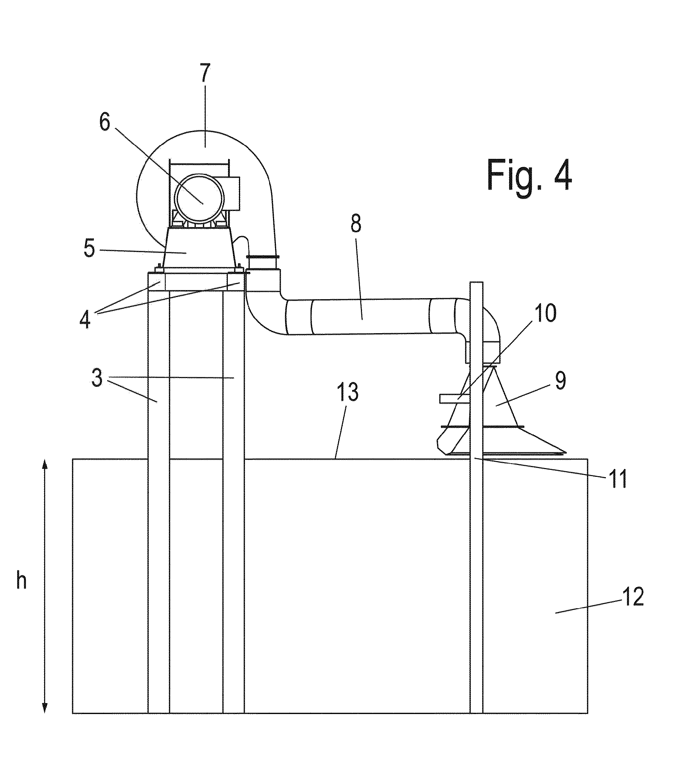

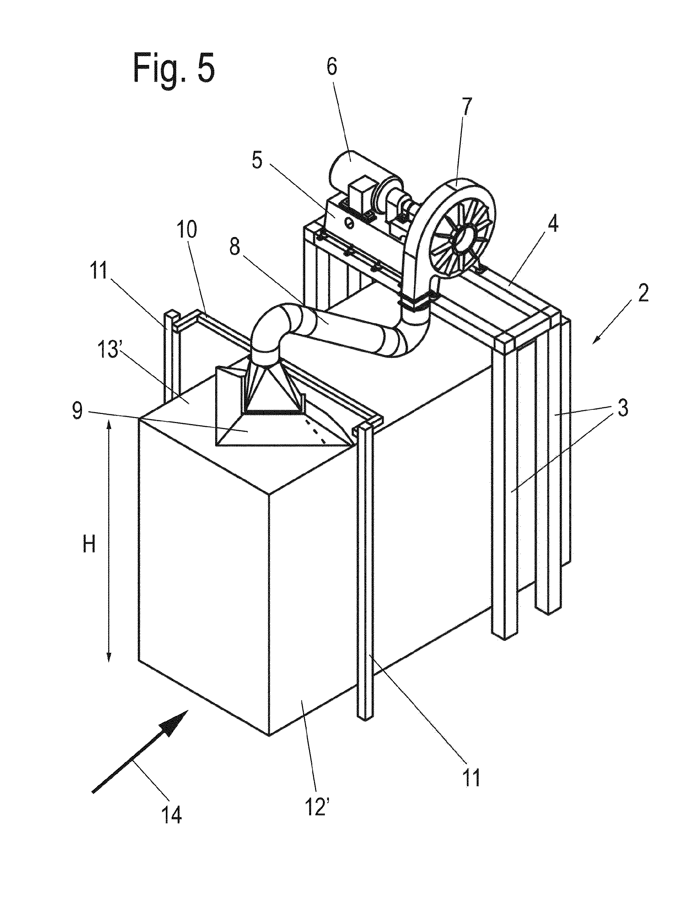

Wie in Figur 4 gezeigt ist, besitzt das schematisch dargestellte Fahrzeug 12 eine Höhe h. Soll nun ein anderes Fahrzeug mit einer größeren Höhe H oder kleineren Höhe von Ablagerungen befreit werden, kann der Halter 10 mit der Düse 9 in der Höhe verfahren werden, wobei der flexible Schlauch 8 die Verbindung zu dem stationär angeordneten Gebläse 7 herstellt. Wie in Figur 5 gezeigt ist, kann dann ein Fahrzeug mit größerer Höhe H über die Düse 9 gereinigt werden.

In dem dargestellten Ausführungsbeispiel ist das Trägersystem 2 mit dem Gebläse 7 in einem Abstand zu der Düse 9 angeordnet, wobei ein zusätzliches Gestell mit Pfosten 11 erforderlich ist. Es ist auch möglich, die Düse 9 an dem Trägersystem 2 höhenverstellbar anzuordnen, damit nur ein einziges Trägersystem montiert werden muss, dann ist der Halter 10 an dem Trägersystem 2 höhenbeweglich angeordnet.

Die meisten Ablagerungen an der Oberseite 13 eines Fahrzeuges 12 können über die Düse 9 und das Gebläse 7 gereinigt werden. Zusätzlich ist es möglich, ergänzend zu der Düse 9 auch eine mechanische Reinigungsvorrichtung vorzusehen, beispielsweise eine Bürste oder ein anderes Reinigungsgerät Die freie Höhe H unter dem Halter 10 kann beispielsweise in einem Bereich zwischen 3 m und 6 m liegen, damit auch höhere Fahrzeuge 12 gereinigt werden können.

### Bezugszeichenliste

- 1: Vorrichtung
- 2: Trägersystem
- 3: Pfosten
- 4: Querstrebe
- 5: Gestell
- 6: Motor
- 7: Gebläse
- 8: Schlauch
- 9: Düse
- 10: Halter
- 11: Pfosten
- 12: Fahrzeug
- 13: Oberseite
- 14: Pfeil

- h: Höhe
- H: Höhe

## Patentansprüche

1. Verfahren zur Entfernung von losen Ablagerungen von der Oberseite eines Fahrzeuges (12), insbesondere von Lastkraftwagen, Anhängern oder Schienenfahrzeugen mittels eines gerichteten Luftstroms , mit den folgenden Schritten:
- Anfahren eines Gestells (11), an dem ein an der Oberseite des Fahrzeuges (12) in Höhe und Winkel positionierbarer Halter (10) mit einer Düse (9) zum Ausblasen von Luft vorgesehen ist, und
- Passieren der Düse (9) und des Halters (10) derart, dass die Ablagerungen an der Oberseite des Fahrzeuges (12) über den Luftstrom entfernt werden.

2. Verfahren nach Anspruch 1, **dadurch gekennzeichnet, dass** der Abstand der Düse (9) zur Oberfläche des Fahrzeuges (12) gesteuert wird.

3. Verfahren nach Anspruch 1 oder 2, **dadurch gekennzeichnet, dass** das Ausblasen der Luft in einem Winkel zwischen 5° bis 45°, insbesondere 10° bis 30°, einstellbar zur Horizontalen erfolgt.

4. Vorrichtung zur Reinigung von Fahrzeugen (12), insbesondere von Lastkraftwagen, Anhängern oder Schienenfahrzeugen, mit einem Gestell (11), an dem ein an der Oberseite (13) des Fahrzeuges (12) positionierbarer Halter (10) vorgesehen ist, **dadurch gekennzeichnet, dass** an dem Halter (10) eine Düse (9) zum Ausblasen von Luft zum Entfernen von Ablagerungen an einer Oberseite (13) eines Fahrzeuges (12) vorgesehen ist.

5. Vorrichtung nach Anspruch 4, **dadurch gekennzeichnet, dass** die Düse (9) über einen flexiblen Schlauch (8) oder durch bewegliche Rohrelemente an ein Gebläse (7) angeschlossen ist.

6. Vorrichtung nach Anspruch 5, **dadurch gekennzeichnet, dass** das Gebläse (7) bodennah neben dem Düsen- Gestell oder an einer Oberseite eines Portals (2) angeordnet ist, das benachbart zu dem Gestell (11) positioniert ist oder das Gestell bildet.

7. Vorrichtung nach einem der vorhergehenden Ansprüche 4 bis 6, **dadurch gekennzeichnet, dass** die Düse (9) relativ zu dem Fahrzeug (12) höhenverstellbar angeordnet ist.

8. Vorrichtung nach Anspruch 7, **dadurch gekennzeichnet, dass** ein Antrieb vorgesehen ist, mittels dem die Düse (9) automatisch in der Höhe verstellbar ist.

9. Vorrichtung nach Anspruch 7 oder 8, **dadurch gekennzeichnet, dass** ein Sensor zur Erfassung der Höhe der Oberseite (13) des Fahrzeuges (12) vorgesehen ist.

10. Vorrichtung nach einem der vorhergehenden Ansprüche 4 bis 9, **dadurch gekennzeichnet, dass** die Düse (9) den Luftstrom in einem Winkel auf die Oberseite des Fahrzeuges (12) aufbläst, der in einem Bereich, gegebenenfalls während des Betriebes einstellbar, zwischen 5° und 45°, insbesondere 10° bis 30°, zur Horizontalen liegt.

11. Vorrichtung nach einem der vorhergehenden Ansprüche 4 bis 10, **dadurch gekennzeichnet, dass** die Düse (9) einen oder mehrere Schlitze aufweist, die sich einzeln oder zusammen über mehr als 60 % der Breite des Fahrzeuges (12) erstrecken, insbesondere über mehr als 80 %.

12. Vorrichtung nach einem der vorhergehenden Ansprüche 4 bis 11, **dadurch gekennzeichnet, dass** das Gestell (11) als Portal ausgebildet ist, an dessen Verbindungselement der Halter (10) mit der Düse (9) angeordnet ist.

13. Vorrichtung nach einem der vorhergehenden Ansprüche 4 bis 12, **dadurch gekennzeichnet, dass** die Düse (9) einen oder mehrere, im Wesentlichen V-förmig angeordnete, Ausblasschlitze aufweist.

14. Vorrichtung nach einem der vorhergehenden Ansprüche 4 bis 13, **dadurch gekennzeichnet, dass** die Düse (9) in Draufsicht im Wesentlichen dreieck-, halbkreis-, oder mehreckförmig ausgebildet ist.

15. Vorrichtung nach einem der vorhergehenden Ansprüche 4 bis 14, **dadurch gekennzeichnet, dass** benachbart zu der Düse (9) eine Vorrichtung zur mechanischen Entfernung von Ablagerungen von der Oberseite eines Fahrzeuges (12) vorgesehen ist.
